# EUROPEAN PATENT APPLICATION

(11) **EP 1 862 676 A1**
(43) Date of publication of application: **05.12.2007**
(21) Application number: 05806714.1
(22) Date of filing: 15.11.2005
(51) Int. Cl.: F04F 10/00, A01K 63/00

(54) **ACTION KEEPING SIPHON UNIT**

(30) Priority: 21.03.2005 JP 2005118919; 16.09.2005 JP 2005303644
(71) Applicant: Tsuruoka, Masao, Chiba 288-0817 (JP)
(72) Inventor: Tsuruoka, Masao, Chiba 288-0817 (JP)
(74) Representative: Skuhra, Udo
(86) International application number: PCT/JP2005/021322
(87) International publication number: WO 2006/100802

(57) **Abstract**

With respect to any overflow from storage tank, without making cutting off or perforation of the tank wall, perpetual maintenance-free outflow is effected by means of a siphon without the use of power pump before overflowing. Auxiliary pools fixed to both ends of siphon are additionally installed. Referring to FIG. 1A, W-curved tube (1) that upon expansion on a plane, assumes a W-shape is used as a siphon. Start-up portions on both sides thereof are used as auxiliary pools. Even when the water level in storage tank (5) lowers to the bottom, a balance is kept by the heads (2) of water held in the auxiliary pools to thereby stop any water flow break in the siphon, enabling perpetual prevention of breakdown of siphon action. Every time the water level in the storage tank once more goes up above the auxiliary pools and set water level (4), by the state of water head (7) similar to that of the siphon tube of FIG. 6 made from the valve 34 of FIG. 7, 38 of FIG, 8, and drainpipe 39, increased water is caused to naturally and rapidly flow out through the siphon.

## Description

### TECHNICAL FIELD

This invention relates to a siphon unit for rapidly discharging liquid.

### BACKGROUND ART

In an aquarium, a farm /a preserve, a pet shop and so on, by use of the methods using a run 22,a groove 23,an aqueduct 24,a underground aqueduct 26 and so on, fresh water that receives the water supply from the water pipe 25 is drained one after the other to tanks placed in order. The said methods are the same as a drainage that liquid goes through a bank wall of a reservoir.

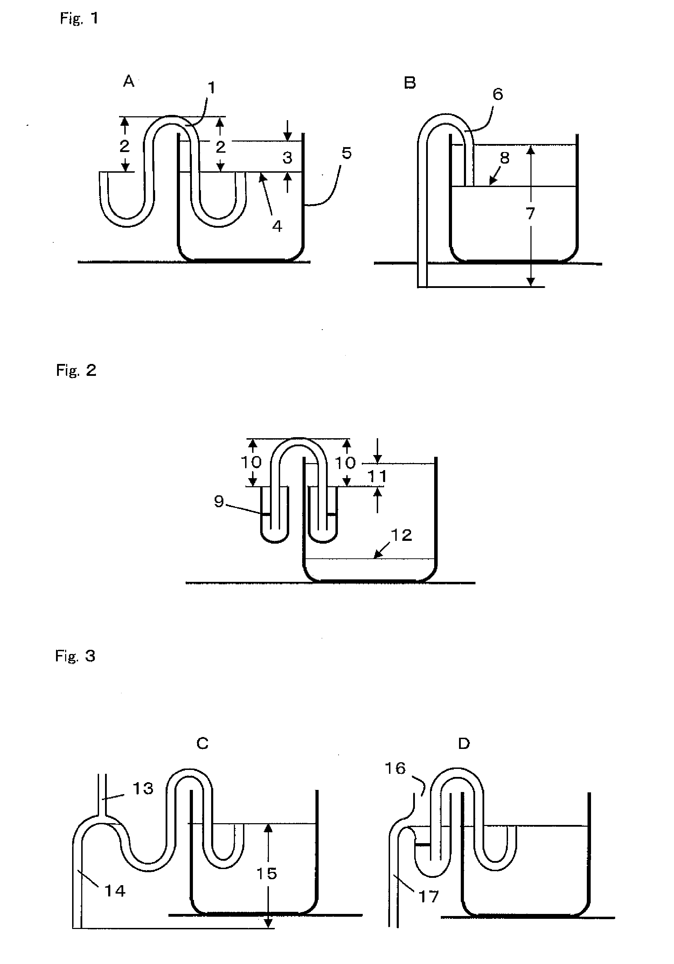

With respect to any spontaneous overflow from a storage tank or a vessel without perforation of the tank or the vessel, There is a method that outflow is done by siphon action of a head 7 when a U-shape tube in FIG.1B or a hose is filled with water. When a storage tank or a container is large, overflow is done after a siphon is filled with water not by the use of manpower but by the use of a power pump at each start.

But then as another usage of a siphon there is a case where a siphon is used as a measuring and draining apparatus, that is to say the outlet pipe of the drain channel is formed as a siphon and the outlet of the outlet pipe is positioned at the same height as the horizontal surface of the liquid in the inside of the container of a liquid storage tank and thereby the inside of the outlet pipe is always filled with liquid and residual volume in the inside of the outlet pipe is held in given volume in order to drain liquid with accuracy and stability in volume from the cylinder of the fixed quantity exhaust pump.

### DISCLOSURE OF THE INVENTION

### PROBLEM TO BE SOLVED BY THE INVENTION

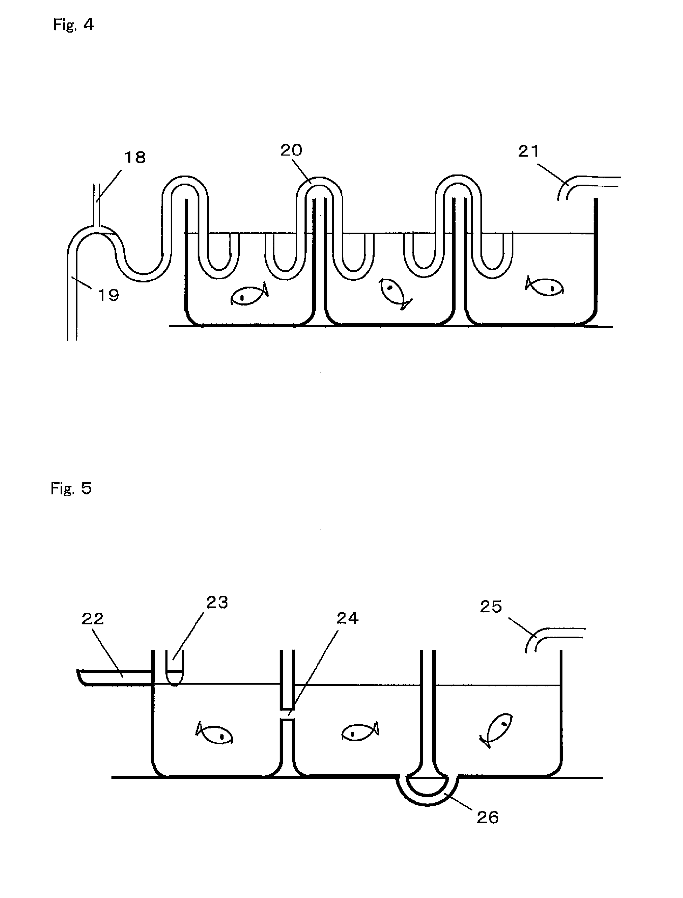

When an aqueduct 24 or a underground aqueduct 26 in FIG. 5 a drainpipe connects with the tank wall of a variety of tanks or a farm /a preserve, a siphon such as a shape indicated in patent document 2 is installed over the tank wall because of the inferiority of stress variance strength and earthquake-resistance, there is a problem that siphon action is damaged and even if water level of the inside of the tank goes up again spontaneous overflow is not effected when water in the inside of the tank has run dry and water level is lower than the water level of an end of the siphon and air flows in the siphon. Therefore, there is a device having the power pump for starting the siphon in the inside of the siphon.

It is an object of the present invention to provide a siphon unit that by solving the said problems perpetual maintenance-free spontaneous overflow is effected rapidly and repeatedly by using siphon action without the use of a power pump showed by the method of the above-mentioned every time water level goes up in the inside of the tank.

### MEANS FOR SOLVING PROBLEM

For the purpose of prevention of breakdown of siphon action by the reason that perpetual overflow is stopped and air flows in the siphon, auxiliary pools in addition to a main pool at the position of the bottom of the auxiliary pools lower than the ends of the siphon and the position of the walls of the auxiliary pools higher than the ends of the siphon and lower than the wall of the storage tank is installed by manner of means indicated below and the inside of the siphon is always filled with liquid.
W-curved tube that upon expansion on a plane, assumes a W-shape is used and extensions extended upward from the downward ends of a U-curved tube are used as auxiliary pools.
Again the ends of the upward U-curved siphon tube are inserted and fixed to the upward openings of the auxiliary pools.
Or, one of ends of the siphon tube is changed, and an auxiliary pool is put on both ends by the method of combining one end of the W-shape siphon tube previously described.
In this way, when the liquid level of the storage tank is lower than the end of the siphon by withering, flow in the siphon stops in the stage that the head of the liquid in the inside of the siphon and the liquid in the inside of both auxiliary pools are in balance and thereby the liquid in the inside of the siphon is perpetually prevented from flowing out. And when the liquid level of the storage tank goes up above the auxiliary pool, by the pressure of the head according to increased liquid, liquid flows spontaneously out of the storage tank through the siphon tube.

To overflow to the position made a choice at random the auxiliary pool outside the storage tank must be connected with the outlet pipe. In the method of the W-shape, the extension is formed as a drainpipe by extending the top of the upward auxiliary pool downward and air is taken in from a vent bored at the top of the mountain-shaped connecting part to break off the relations of the water head between the auxiliary pool and the outlet pipe.
Again in the method of the auxiliary pools a drainpipe is connected with the side wall of the auxiliary pool outside the storage tank at the height of the auxiliary pool in the storage tank and liquid is prevented from flowing out by arranging the wall of the auxiliary pool outside the storage tank higher than the connection portion and the upper portion is kept open.
And the breakdown of siphon action caused by suctioning liquid in the auxiliary pool and the siphon tube out by suction power by the heads of the drain pipe is prevented.
And to rapidly drain by making use of suck action caused by the head of the drain pipe, a valve for automatically shutting the vent or an opening to the atmosphere of the drain pipe only within the range of water level of liquid that exceeds the auxiliary pool where air is not inhaled from the suction port of the storage tank into the siphon tube by whirlpool of liquid is installed.

### EFFECT OF THE INVENTION

It is possible to rapidly discharge liquid naturally and perpetually without the need of maintenance and power until the liquid in the siphon unit has evaporated and been lost and contribute to energy conservation.

As for the tank the siphon unit is used, because it is not necessary to drill a hole in tank wall, the stress is not concentrated on the tank wall and because it is not necessary to connect each tank directly with the pipe, each tank can be placed independently. So then because each tank is strong against collapse, burst and leakage caused by the earthquake or the tremble, it is possible to set the chemical plant tank and the medicine tank to a smooth place, and to flow liquid out consecutively and to contribute for safety.

By using the siphon, as shown in FIG.4 compared with FIG. 5, the drainpipe can be easily set up without perforation of the processing existing and a cheap, free tank can be laid out.

By adding the up and down device to the siphon unit it is possible to provide equipment having water level control, the flowing quantity control, and the measurement exhaust which can be done with ease and accuracy.

### BRIEF DESCRIPTION OF DRAWING

FIG. 1 is a schematic illustration of the principle of the invention.
FIG. 2 is a schematic illustration of another type of the invention.
FIG. 3 is a schematic illustration where it explains the method of connecting the drainpipe.
FIG. 4 is a schematic illustration where this siphon unit was arranged in the displayed tanks.
FIG. 5 is a schematic illustration of a conventional drain method.
FIG. 6 is a schematic It is a perspective illustration of the water tank that actually uses this siphon unit.
FIG. 7 is an installation of the float valve for a vent because of the rapid drain.
FIG. 8 is a schematic illustration where it explains the water surface type substitution valve that uses the vent extension tube for the rapid drain.

### THE BEST MONE FOR CARRING OUT THE INVENTION

In addition to the main reservoir (the storage tank) auxiliary pools are installed to both ends of a siphon tube. And increased water that exceeds set water level can be perpetually drained out without the use of power pump and the need of maintenance as well as drain by perforation of the lower part of the storage tank.

### EXAMPLE 1

The auxiliary pools are installed to both ends of the siphon tube that is used for drain in the following methods.
One method is as follows. By the use of W-curved tube 1 that upon expansion on a plane assumes a W-shape in FIG. 1 risers of both ends of the tube are used as auxiliary pools at a position of the both ends that are lower than a mountain part of the center of the tube and the storage tank 5, higher than the trough part of the both sides.
Another method is as follows. Both auxiliary pools 9 in FIG. 1A for always soaking the end of the siphon tube in water are fixed at the bottom position of the each auxiliary pool that is lower than a trailing end point of the siphon tube and at the wall position of the each auxiliary pool that is higher both ends of the siphon tube and lower than the wall of the storage tank.
Other method is as follows. One end of a siphon tube is composed as shown in FIG. 3D and combined with the one side of the W-curved tube of the type of the above-mentioned W-curved tube in FIG. 3D.
And then by balancing by head 2 and 10 of water of the inside the siphon tube and of the auxiliary pools, even if water level of the inside the storage tank goes down than water level 4 of the end part of the siphon tube inside the storage tank or than water level 12 as shown in FIG. 2, the flow finishing of water of the inside the siphon can be stopped, the breakdown of the siphon action can be prevented, and the siphon action can be maintained and managed perpetually. When water level of the inside the storage tank goes up and head 3 as shown in FIG. 1A or head 11 as shown in FIG. 2 is caused, water is made to flow out of the storage tank naturally through the siphon by pressure of the head.

It is necessary to connect the drainpipe with the auxiliary pool to drain to an arbitrary position. By use of a method of installing a vent pipe 13 or a vent on the heaven side of the joint of the drainpipe 14 as shown in FIG. 3C, or connecting a drainpipe 17 with the side of the auxiliary pool fixed to the siphon tube seen FIG. 3D and installing an opening 16, the water head relation between the auxiliary pool and the drainpipe can be severed, suction water head 15 of the drainpipe can be not applied to the inside of the siphon tube, water of the inside of the siphon tube and water of the inside of the auxiliary pool can be not inhaled fully into the drainpipe, thereby the siphon action can be maintained and managed, and overflow drain can be made at the proper water level of the inside the tank without the need of maintenance.

In this siphon unit, according to circumstances, the glass tube where collecting of the air of the inside the siphon tube can be observed is used because air collects in the inside the siphon and doesn't function when the bubble of the handling liquid exceeds the limit and it doesn't set it up in the liquid that gasifies easily and the bubbling vicinity.

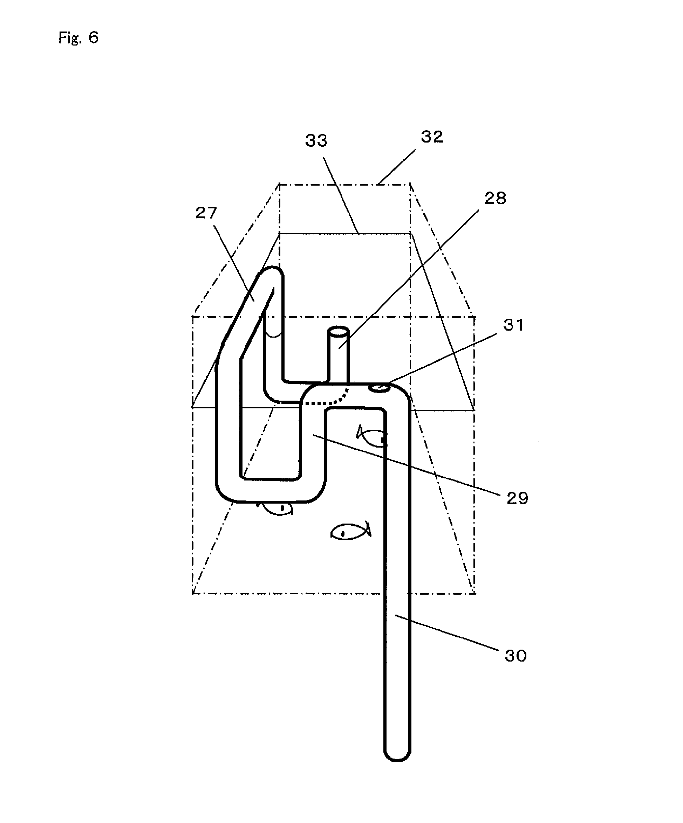

Though W-curved tube in FIG. 1A is called W-curved tube or W shape siphon tube because upon expansion on a plane it assumes a W-shape. However for draining rain water to a water tank 32 at a given water level as indicated in FIG. 6 it is possible to arrange siphon tube 27 portion, an auxiliary pool 28 of a pipe rising in the tank, an auxiliary pool of a pipe rising outside the tank 29, a drainpipe 30, and a vent 31 in a free style within the range where the principle is not ruined to match it to a tank or surrounding circumstances.

The following method by which the processing installation can be done at a low price and easily only by using the pipe is recommended. W-curved tube 1 in FIG. 1A that upon expansion on a plane assumes a W-shape compared with FIG. 2 is recommended. Moreover, to connect the drainpipe that can drain to an arbitrary position, the auxiliary pool method using only the pipe in FIG. 3C that is simpler than a device shown in FIG. 3D is recommended. The method is shown in FIG. 4. The water supplied by the water pipe is drained to the tanks one after the other where a W-curved tube 20, a vent pipe 18, and a drainpipe 19 were set up. When existing tanks are arranged and constructed, the method in FIG. 4 is far simpler compared with the method of perforation of the storage tank in FIG. 5.

When vent diameter of the joint of the auxiliary pool and the drainpipe is too small air to sever the suck action of the drainpipe that applies to the siphon tube cannot finish entering, the water of the inside the siphon is completely sucked out with the drain pipe and siphon action is broken and siphon action cannot be persistently maintained. That is, when head in FIG. 1 is enough and an effective diameter of the air path of vent pipe in FIG. 13 is small the suck action of the head 15 of the drainpipe 14 indicated in FIG.3 works, and thereby there is an advantage in which the drain speed is quickened. However, it is necessary to expand an effective vent diameter of the air path to obtain an amount of necessary air before the water level of the tank falls, the head in FIG. 1 decreases, it approaches the water level 4, air with the whirlpool of water is inhaled into the unit, and thereby siphon action breaks.

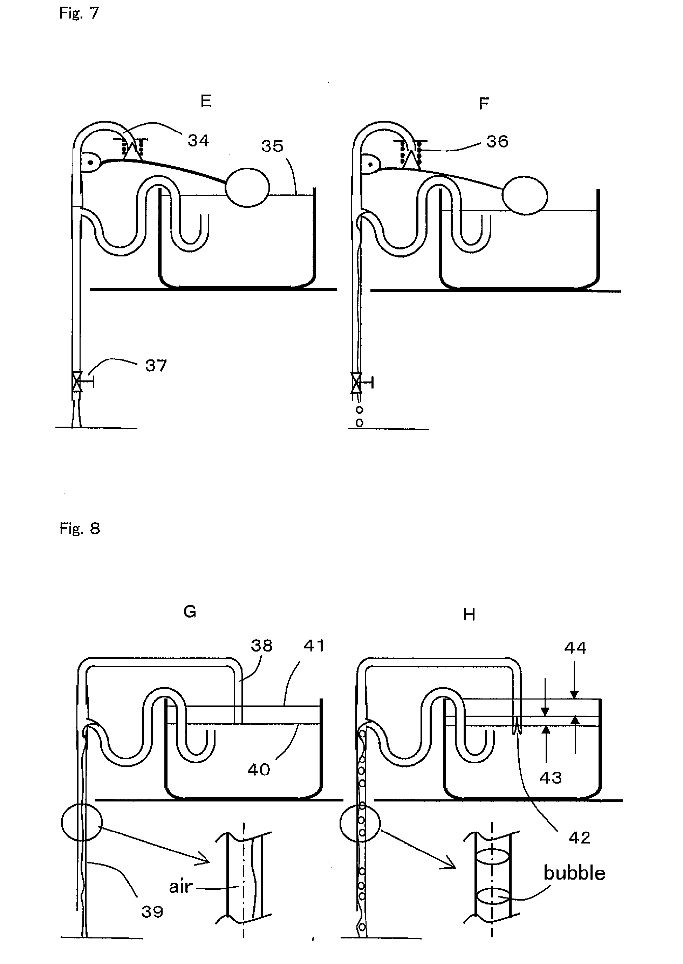

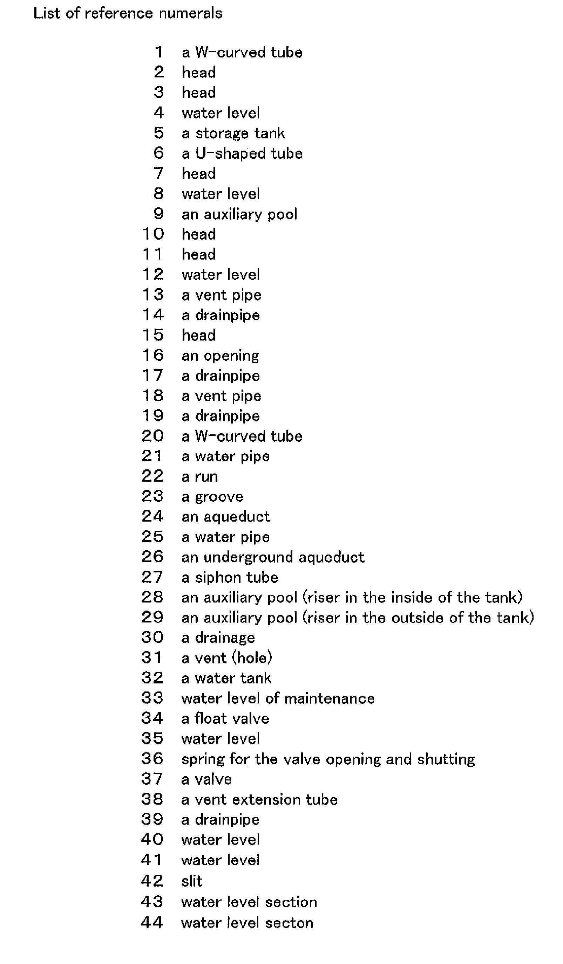

The electric motor operated valve with an electric water level sensor can be selected. But The float valve 34 in FIG. 7 is a vent valve for the rapid drain which is installed to make use of the suction and drainage capability of the head 15 of FIG. 3C according to the water level 35 of the tank.
The state to shut the valve is indicated in FIG. 10E, and the state to open the valve is indicated in FIG. 10F.
To open the valve from the adsorption of the vacuum pressure, spring 36 for valve opening/closing is installed.
It is possible to detach the vent pipe from the float valve unit by the screw or by lightly press-fitting. And a valve 45 of the drainpipe that shuts when the supply of priming water is done from the air pipe to the whole unit is installed in the bottom part of the drainpipe at the first stage of the installation.

The method of the water surface type vent opening and shutting function pipe that inserts a vent extension tube 38 of FIG. 8 in the tank can be applied in place of the valve and there is simplicity and a cost performance.

When the surface of water inside the tank closes the vent extension tube and rapid drain starts by using a siphon that is united with the drainpipe as indicated in FIG. 1B in place of the action keeping type siphon action and the vent tube is shut at the water level 40 of FIG. 8 for a split second, as the inside of the drainpipe 39 is explained in FIG. 8, the water head of the drainpipe is not caused because water falls along inner wall with the air path from top to bottom left. Therefore, it is likely to fall into the state that cannot be high-speed drained even if rising up to the water level 41 in the tank like being a little flowing quantity. Consequently, like a slit 42 of FIG. 8H, by cutting the side of the end of the vent extension pipe, as the water level in the tank goes up, ventilation is shut gradually, and the pulsating flow is generated in the current of air of the vent tube. In a word, as the inside of the drainpipe is explained in FTG. 8H, the water level section 43 where pulsating flow of air bubble mixing is caused is temporarily necessary.

The water level section of FIG. 8H that enables rapid drain by making the best use of the suction head of the drainpipe full is the level in the tank as shown in FIG, 3C. However, in the water level section 43, the sound that looks like bocoboco and boiling sound is generated a little. Then, when you bother the sound, float valve 34 of FIG. 7 is recommended.

When the rapid drain function is installed like this it is necessary to consider the balance of an amount of the water supply in the tank, a head of the drainpipe, and a flowing quantity effective diameter of the entire unit because in both the float valve type for the vent and the alternative surface of the water type, as explained ahead, if the valve is shut momentarily the situation not rapidly drained happens, and if the drainpipe is too large the same thing occurs, and if the drainpipe is too small the drain capability reduces from flow resistance.

### INDUSTRIAL APPLICABLITY

In the tanks of FIG.7 and 8, a draining W-shape siphon 42 that uses a polyvinyl chloride(PVC)PVCφ16 pipe for water service, a vent pipe 43 that uses a PVCφ16 pipe, and a drainpipe that uses a PVCφ13 pipe of length of 1m that corresponds to suction head of FIG. 3 are arranged and the drain capability was tested. As a result, it was confirmed that this siphon unit has 20 l/m drain capability. Also, it was confirmed that this siphon unit has performances as well as the method by perforation of the lower part of the storage tank for connecting with a drainpipe.

Though the drain capability changes depending on the kind of the thickness of a flowing quantity effective diameter of the tube where the unit is composed and the thrown liquid, these can be used for the dam, the reservoir, the tank, the container, the beaker, and also for the liquids other than the water such as oil, the melt, the chemical, the medicine, the melting plastic, and the melting metals widely multipurpose.

Because it installs on an easy taking the place of the engine pump and it is possible to detach it, this siphon unit is used for the irrigation water supply of millrace U character ditch and the rice field without holes.

Because the amount of the supply from the first tanks to the second tank can be controlled by adding the going up and down device to either of this unit or the first tank, this siphon unit is used for the mixture tank of a liquid material or the reagent.

## Claims

1. An action keeping siphon unit having
a main storage tank,
auxiliary pools fixed to both ends of a siphon which are additionally installed over a wall of the main storage tank at a position of the bottom of the auxiliary pools that are lower than the ends of the siphon and the walls of the auxiliary pools higher than the ends of the siphon, always kept the inside of the siphon filled with liquid and operated by siphon action,
a liquid discharge pipe extended downward and connected with the height part of wall of the auxiliary pools outside the main storage tank at the top of the auxiliary pools, a vent or an opening installed on the joint heaven for taking air through it, thereby the suck action by the descent of the liquid inside of the liquid discharge pipe attenuated, enabling prevention of breakdown of siphon action by liquid's being completely sucked out by suck action,
a valve or a vent opening and shutting function tube for shutting air path of the vent or the opening only within the range of liquid level that exceeds the auxiliary pool in the storage tank because air is not inhaled from the suction port into the siphon by generating the whirl of liquid inside the storage tank, the said valve installed in the vent tube at a position that is higher than the wall of the storage tank when the valve is used, or the said vent opening and shutting function tube having the shape to extend the vent tube and insert into the surface of the liquid in the storage tank installed over the storage tank when the vent opening and shutting function tube is used,
a capability of functioning as a liquid discharge pump having a quick discharge by making the most of use of suck action by gravity of liquid that fills the total length of the liquid discharge pipe whereby overflow over a set level inside the main storage can be discharged perpetually without the need of maintenance,
